# FASCICULE DE BREVET EUROPEEN

(11) **EP 2 211 624 B1**
(45) Date de publication et mention de la délivrance du brevet: **05.12.2012**
(21) Numéro de dépôt: 08843247.1
(22) Date de dépôt: 09.10.2008
(51) Int. Cl.: A01N 61/00, A01N 65/00

(54) **UTILISATION DES SUBSTANCES HUMIQUES COMME ACTIVATEURS DES AGENTS MOLECULAIRES SPECIFIQUES DE L'ABSORPTION DU FER CHEZ LA PLANTE**
VERWENDUNG VON HUMINSUBSTANZEN ALS AKTIVATOREN FÜR MOLEKULARE WIRKSTOFFE MIT SPEZIFITÄT FÜR DIE PFLANZLICHE EISENABSORPTION
USE OF HUMIC SUBSTANCES AS ACTIVATORS OF MOLECULAR AGENTS SPECIFIC TO PLANT IRON ABSORPTION

(30) Priorité: 10.10.2007 FR 0758196
(43) Date de publication de la demande: 04.08.2010
(73) Titulaire: Timac Agro International, 35400 Saint Malo (FR)
(72) Inventeur: LEMENAGER, Diane, 31150 Mendigorria (ES); BACAICOA, Eva, 31007 Pamplona (ES); GARCIA-MINA, Josemaria, 31170 Iza (ES); YVIN, Jean-Claude, 35400 Saint Malo (FR)
(74) Mandataire: Gillet, Raphaëlle
(86) Numéro de dépôt international: PCT/FR2008/051835
(87) Numéro de publication internationale: WO 2009/053625

(56) Documents cités:
- DATABASE CA [Online] CHEMICAL ABSTRACTS SERVICE, COLUMBUS, OHIO, US; CSEH, EDIT ET AL: "Study of the effectiveness of iron uptake" XP002476051 extrait de STN Database accession no. 1983:487212 & AGROKEMIA ES TALAJTAN , 31(3-4), 311-32 CODEN: AKTLAU; ISSN: 0002-1873, 1982,
- DATABASE CA [Online] CHEMICAL ABSTRACTS SERVICE, COLUMBUS, OHIO, US; GOVINDASMY, R. ET AL: "Effect of humic acids on the growth, yield and nutrient content of sugarcane" XP002476052 extrait de STN Database accession no. 1992:469091 & SCIENCE OF THE TOTAL ENVIRONMENT , 117-118, 575-81 CODEN: STENDL; ISSN: 0048-9697, 1992,
- DATABASE CA [Online] CHEMICAL ABSTRACTS SERVICE, COLUMBUS, OHIO, US; LOBARTINI, JUAN C. ET AL: "Absorption of iron humate in nutrient solutions by plants" XP002476053 extrait de STN Database accession no. 1988:220890 & PLANT AND SOIL , 106(2), 153-7 CODEN: PLSOA2; ISSN: 0032-079X, 1988,
- DATABASE CA [Online] CHEMICAL ABSTRACTS SERVICE, COLUMBUS, OHIO, US; WALLACE, ARTHUR ET AL: "Some plant physiological effects of humic acids derived from leonardite" XP002476054 extrait de STN Database accession no. 1967:472863 & CURR. TOP. PLANT NUTR. , 45-52 CODEN: 16VCA4, 1966,
- LOUÉ ET AL.: "Oligoéléments en agriculture", 1993, SCPA-Nathan pages 72-73, * the whole document *

### SEQUENCE LISTING

<110> TIMAC AGRO INTERNATIONAL
   Lemenager, Diane
   Bacaicoa, Eva
   Garcia-Mina, Josemaria
   Yvin, Jean-Claude
<120> Utilisation des substances humiques comme activateurs des agents moléculaires spécifiques de l'absorption du fer chez la plante
<130> 1H294250 0001 WO PCT
<150> FR 07 58196
   <151> 2007-10-10
<160> 10
<170> PatentIn version 3.3
<210> 1
   <211> 18
   <212> DNA
   <213> Artificial
<220>
   <223> Amorce sens CsFRO1
<400> 1
   agcggcggca gtggaatc 18
<210> 2
   <211> 22
   <212> DNA
   <213> Artificial
<220>
   <223> Amorce antisens CsFRO1
<400> 2
   gtttggagga ggtggaggaa gg 22
<210> 3
   <211> 22
   <212> DNA
   <213> Artificial
<220>
   <223> Amorce sens CsIRT1
<400> 3
   ttcgcagcag gtatcattct cg 22
<210> 4
   <211> 22
   <212> DNA
   <213> Artificial
<220>
   <223> Amorce antisens CsIRT1
<400> 4
   caccactcac tacaggcaac tc 22
<210> 5
   <211> 22
   <212> DNA
   <213> Artificial
<220>
   <223> Amorce sens Cstua1
<400> 5
   accgttggaa aggaaattgt tg 22
<210> 6
   <211> 18
   <212> DNA
   <213> Artificial
<220>
   <223> Amorce antisens Cstua1
<400> 6
   ggagccgaga ccagaacc 18
<210> 7
   <211> 24
   <212> DNA
   <213> Artificial
<220>
   <223> Amorce sens Cstua4
<400> 7
   actacaccgt tggaaaggaa attg 24
<210> 8
   <211> 19
   <212> DNA
   <213> Artificial
<220>
   <223> Amorce antisens Cstua4
<400> 8
   aaaggaggga gccgagacc 19
<210> 9
   <211> 21
   <212> DNA
   <213> Artificial
<220>
   <223> Amorce sens Cstua6
<400> 9
   gacattgagc gacctaacta c 21
<210> 10
   <211> 21
   <212> DNA
   <213> Artificial
<220>
   <223> Amorce antisens Cstua6
<400> 10
   aactggattc tgggatatgg g 21

## Description

La présente invention a essentiellement pour objet une nouvelle utilisation des substances humiques, naturelles ou synthétiques.

Plus précisément, la présente invention concerne l'utilisation d'une composition comprenant des substances humiques comme activateurs de l'expression des gènes codant les agents moléculaires spécifiques de l'absorption du fer chez la plante. L'utilisation de cette composition trouve une application particulièrement avantageuse lorsque la plante est en condition de suffisance de fer.

Parmi les minéraux essentiels, le fer joue un rôle important dans les processus biologiques fondamentaux tels que la croissance, le développement, la photosynthèse et la respiration des végétaux.

La réactivité du fer avec l'oxygène conduit à sa grande insolubilité et à une toxicité potentielle, ce qui rend son utilisation difficile par les organismes aérobies. Sa concentration dans les sols sous une forme assimilable par la plante est donc bien souvent un facteur limitant de la production végétale.

La carence en fer chez la plante peut gravement altérer sa physiologie, et elle représente ainsi un des problèmes les plus importants qu'ont à résoudre les agriculteurs pour les cultures développées sur des sols basiques et calcaires.

A l'opposé, un excès de fer ferreux soluble, rencontré dans des sols acides par exemple, peut conduire à une toxicité ferreuse due à la réactivité du fer avec les formes réduites de l'oxygène et à la production d'espèces radicalaires.

Il existe donc une fenêtre optimale de concentration en fer pour qu'une plante fonctionne correctement et effectue une croissance normale. Cette concentration optimale fait l'objet de nombreuses régulations contrôlant les systèmes actifs de l'acquisition du fer du sol par les racines, ainsi que son transport et sa distribution dans tous les organes de la plante.

Au niveau de leurs racines, les plantes disposent de systèmes actifs permettant d'absorber le fer du sol. Chez les plantes dites « non-grammées » l'assimilation du fer repose sur un mécanisme en trois étapes : (i) une HT-ATPase racinaire libère des protons, ce qui permet l'acidification du sol et la solubilisation du fer ferrique (Fe³⁺), (ii) une réductase ferrique réduit le fer ferrique en fer ferreux (Fe²⁺) et (iii) ce dernier est transporté dans la plante par un transporteur hautement spécifique du fer.

En conditions de carence en fer, l'expression des gènes codant la chélate-réductase et du transporteur spécifique du fer est fortement induite dans l'épiderme racinaire. Si la régulation de ces gènes par le statut en fer est bien documentée, les éléments senseurs, les voies de transduction du signal et les régions promotrices impliquées restent peu connus.

L'apport de chélates de fer de synthèse ayant la capacité de se complexer avec le fer et le rendre assimilable par les plantes est le moyen le plus couramment utilisé pour corriger les carences en fer. Cependant, ces produits peuvent poser des problèmes environnementaux et de santé.

Les substances humiques sont capables de se complexer avec les métaux présents dans le sol, et en particulier le fer. La formation de ces complexes permet de rendre les métaux disponibles pour les processus nutritionnels des plantes car ils évitent que les métaux ne soient précipités sous forme d'oxydes, d'hydroxydes ou de carbonates qui sont insolubles et donc inaccessible pour les racines des plantes.

Une alternative serait de pouvoir stimuler les mécanismes naturels que les plantes possèdent pour augmenter l'efficacité d'absorption du fer qui est présent dans le sol.

C'est dans ce contexte que les inventeurs ont constaté de manière tout à fait inattendue que l'utilisation d'une composition comprenant des substances humiques permet d'activer l'expression des gènes codant les agents moléculaires qui sont naturellement impliqués spécifiquement dans l'absorption du fer chez les plantes.

En particulier, les substances humiques sont capables d'activer la réponse naturelle des plantes qui sont en condition de suffisance de fer.

Si d'autres molécules telles que l'éthylène ou l'oxyde nitrique peuvent augmenter la réponse racinaire des plantes en condition de carence de fer, elles ne sont cependant pas capables d'induire cette réponse dans des conditions de suffisance de fer.

Il existerait donc deux catégories de molécules qui sont capables d'agir sur l'absorption du fer chez les plantes : celles qui peuvent restaurer une absorption du fer afin d'éviter les conséquences d'une carence (simple retour à un niveau normal d'absorption) mais qui sont incapables d'agir en condition de suffisance de fer, et celles qui sont capables de restaurer l'absorption du fer en condition de carence de fer et de continuer à la stimuler en condition de suffisance de fer, c'est-à-dire qui sont capables de continuer d'activer la réponse naturelle de la plante pour sur-absorber du fer au-delà du niveau strictement nécessaire.

Les inventeurs ont ainsi démontré que les substances humiques appartiennent à cette deuxième catégorie de molécules dont l'utilisation en condition de suffisance de fer permet de conférer un certain nombre d'avantages associés chez les plantes.

En effet, la « sur-absorption » du fer par la plante suite à l'utilisation des substances humiques confère des avantages pour la plante elle-même, comme notamment une meilleure croissance, une photosynthèse améliorée, une résistance accrue aux pathologies. De plus, les différents effets des substances humiques permettent d'améliorer le rendement des cultures et d'améliorer le contenu en fer des graines des plantes. Par ailleurs, l'utilisation des substances humiques selon l'invention permet d'obtenir des plantes qui possèdent un avantage nutritionnel puisqu'elles sont enrichies en fer.

Les substances humiques constituent les éléments principaux de l'humus qui représente la matière organique naturelle du sol. De composition hétérogène et complexe, ces substances peuvent être subdivisées en différentes fractions (acides fulviques, acides humiques, humine) et en sous-fractions (acide glucique, acide ulmique, acide apocrénique, acide hymatomelanique etc) en fonction de différents critères tels que leur acidité, leur couleur, leur solubilité, etc.

Le schéma suivant est une représentation possible des propriétés physico-chimiques des substances humiques selon Stevenson, F.J., 1994. Humus Chemistry, Deuxième Edition, Wiley, New York.

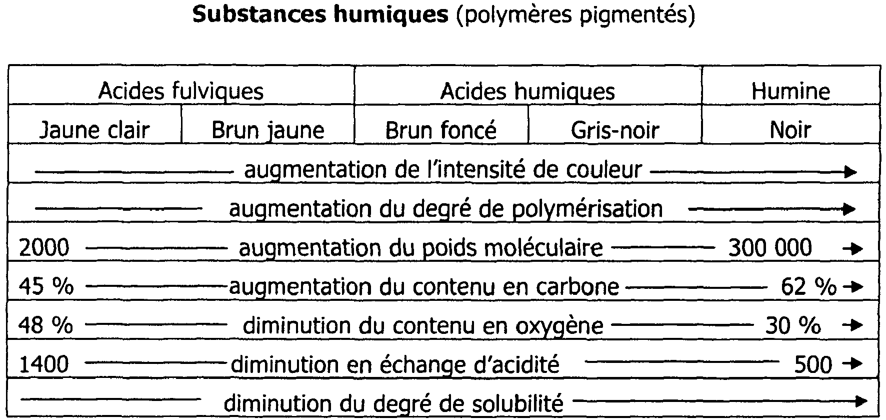

Ainsi, les acides humiques représentent une fraction des substances humiques qui est non soluble dans l'eau dans des conditions acides (pH < 2) mais soluble à des valeurs de pH supérieures.

Les acides fulviques représentent quant à eux une fraction soluble dans l'eau quelles que soient les valeurs de pH.

L'humine représente la fraction des substances humiques qui n'est pas soluble dans l'eau quelle que soit la valeur du pH.

Dans le cadre de la présente invention, le terme « condition de carence en fer » représente les conditions dans lesquelles les plantes présentent des signes extérieurs ou symptômes de carence en fer tels que la chlorose ferrique (jaunissement des feuilles).

Ainsi, le terme « condition de suffisance de fer » signifie des conditions dans lesquelles les plantes ne présentent pas les symptômes de carence de fer mentionnés ci-dessus.

La présente invention a pour objet l'utilisation d'une composition comprenant des substances humiques en tant qu'activateur de l'expression des gènes codant les agents moléculaires qui sont spécifiquement impliqués dans l'absorption du fer chez les plantes. L'utilisation d'une telle composition permet de stimuler l'absorption du fer chez les plantes en condition de suffisance de fer.

N'importe quelle matière organique riche en substances humiques (SH) peut être utilisée selon l'invention. Dans le cadre de la présente invention, la matière organique utilisée devra contenir au moins 5 % de substances humiques (poids/poids).

Parmi les matières organiques naturelles, on peut notamment utiliser les léonardites, lignites, tourbes, le compost de résidus organiques.

Toute matière organique de synthèse contenant des substances humiques peut également être utilisée dans le cadre de la présente invention.

Les matières organiques contenant des substances humiques peuvent être utilisées telles quelles ou bien les substances humiques sont extraites préalablement à leur utilisation. Les substances humiques peuvent notamment être extraites et/ou purifiées par les procédés bien connus de l'homme du métier (Stevenson, 1994, Humus Chemistry, Deuxième Edition, Wiley, New York).

De préférence, on utilise une composition comprenant des substances humiques qui ont été préalablement extraites de la matière organique.

Par ailleurs, les substances humiques peuvent provenir d'un procédé de synthèse (Hanninen et al., 1987, The Science of the Total Environment, 62, 201-210) ou de transformation de substances humiques naturelles, notamment par hémisynthèse.

La matière organique naturelle préférée selon l'invention est la léonardite. Ainsi, on utilise de préférence des substances humiques extraites de la léonardite ou bien on utilise directement la léonardite en tant que matière organique naturelle contenant des substances humiques.

N'importe laquelle des fractions des substances humiques peut être utilisée selon l'invention. De préférence, on utilise les acides humiques et/ou les acides fulviques, et de manière encore plus préférée les acides humiques. La composition utilisée selon l'invention peut en particulier comprendre la fraction brune et/ou grise des acides humiques.

Selon un mode de réalisation particulièrement préféré, les substances humiques se présentent sous la forme de sels d'acides humiques. Parmi les sels préférés, on peut notamment citer par exemple les sels d'ammonium, les sels de sodium, les sels de potassium. De préférence, on utilise en particulier les sels potassiques d'acides humiques.

Dans la composition qui est utilisée selon l'invention, les substances humiques sont avantageusement présentes en une quantité allant de 5 à 70 % (poids/poids), de préférence de 10 à 70 % (poids/poids), ou bien encore de 15 à 50 % (poids/poids).

La composition comprenant les substances humiques peut également contenir un ou plusieurs nutriments minéraux (comme par exemple, de l'azote, de l'urée, du phosphate diammonium, du sulfate d'ammonium, de la potasse et du phosphore), un ou plusieurs composants bio-stimulants des plantes comme par exemple, des sucres, oligosaccharides, polysaccharides (par exemple le chitosan), des auxines (acide indolacétique et dérivés, tryptophane), des cytokinines (zéatine et dérivés, isopentyladénine et dérivés, isopentyladénosine et dérivés, adénosine, adénine, isopentyl- alcool), gibbérellines, éthylène, ou précurseurs de l'éthylène, polyamines, oxyde nitrique ou précurseurs donneurs d'oxyde nitrique, nucléotides cycliques ou composants ayant la capacité d'augmenter la concentration intra-cellulaire de nucléotides cycliques, acides aminés, brassinoestéroïdes, salicylates et ligno-sulfonates, ou bien encore des extraits d'algues comprenant de tels composants.

En particulier, la composition utilisée selon l'invention contient du L-tryptophane en plus des substances humiques.

Ces nutriments minéraux seront généralement présents au sein de la composition en une quantité de 1 à 50 % (poids/poids), et de préférence en une quantité de 1 à 10 % (poids/poids).

Outre les substances humiques, tout composé additionnel contenu dans la composition qui est utilisée selon l'invention est présent dans des quantités habituellement utilisées et qui sont compatibles avec la culture des plantes.

La fabrication de la composition comprenant les substances humiques utilisées selon l'invention est réalisée par simple mélange des composants soit en phase liquide aqueuse ou organique, soit en phase solide. De préférence, les substances humiques seront utilisées en phase liquide aqueuse telle que l'eau. Ce mélange peut être réalisé à n'importe quelle température et pression, et de préférence à 25°C et 1 atmosphère de pression.

La composition comprenant les substances humiques peut se présenter sous la forme d'un produit liquide ou solide, insoluble dans l'eau ou partiellement ou totalement soluble dans l'eau, et de préférence soluble dans l'eau. Parmi les formes solides, la composition peut par exemple se présenter sous la forme de poudre ou de granulés.

Dans le cas d'une forme liquide, la composition comprend de préférence de 5 à 15 % (poids/poids) de substances humiques et dans le cas d'une forme solide de préférence de 5 à 70 % (poids/poids) de substances humiques.

Lorsque la composition utilisée selon l'invention se présente sous une forme solide, elle comprend avantageusement un agent fluidisant, comme par exemple de la sépiolite. Lorsque de la sépiolite est incorporée dans la composition utilisée selon l'invention, elle y est présente en une quantité allant de 10 à 50 % (poids/poids).

De manière préférée, la composition se présente sous une forme particulièrement bien adaptée à une répartition aisée et homogène pour la culture des plantes.

La composition est de préférence utilisée par application au niveau des feuilles et/ou des racines des plantes qui sont à traiter, par tout moyen de distribution approprié, comme par exemple par pulvérisation dans le cas d'une formulation liquide. De préférence, la composition comprenant les substances humiques est appliquée au niveau de la région racinaire des plantes. La composition comprenant les substances humiques peut également être introduite dans le système d'irrigation en eau et/ou en engrais (fertigation). Dans le cas d'une formulation solide, celle-ci peut être répartie sur toute la surface du sol ou de préférence localisée dans la région des racines des plantes à traiter.

De manière générale, la composition peut être utilisée à raison de 5 à 50 litres par hectare pour une formulation liquide et de 100 à 750 kg par hectare pour une formulation solide.

En particulier, la composition est préférentiellement utilisée dans des quantités allant de 5 à 30 litres par hectare pour une formulation liquide contenant 15 % (poids/poids) de substances humiques sous forme de sels potassiques. Des quantités d'environ 100 kg à 500 kg par hectare sont en particulier utilisées dans le cas d'une formulation solide contenant 30 % (poids/poids) de substances humiques. L'homme du métier saura adapter les quantités à utiliser en fonction du mode d'application choisi. En particulier, les quantités inférieures sont de préférence utilisées lorsque la composition est appliquée dans la région racinaire alors que les quantités supérieures sont avantageusement utilisées lorsque la composition est appliquée sur toute la surface du sol. Par ailleurs, les substances humiques sont utilisées en une seule application ou bien plusieurs applications séparées de 15 jours.

L'activité des substances humiques sur l'absorption du fer chez les plantes sera décrite plus en détails dans les exemples qui suivent et qui se réfèrent aux figures annexées dans lesquelles :

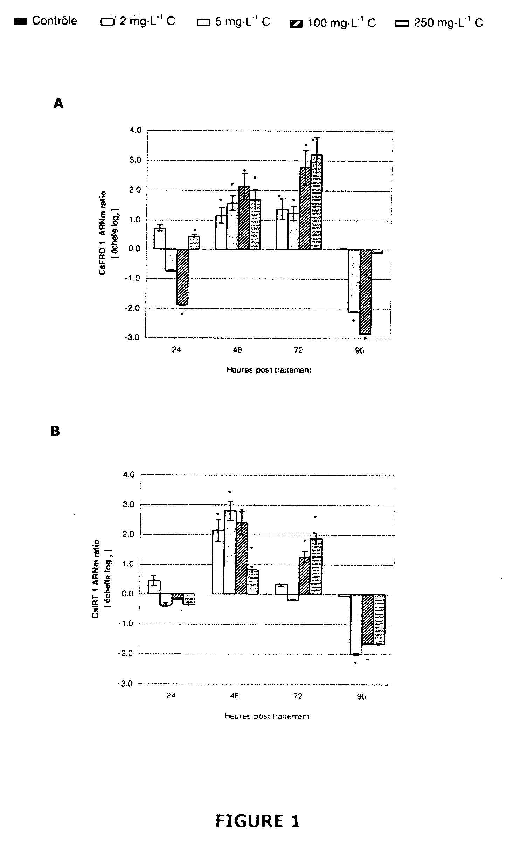

La figure 1 est une représentation graphique sous forme d'histogrammes du contenu relatif en ARNm de la chélate-réductase *(CsFRO1;* figure 1A) et du transporteur spécifique du fer IRT1 (*CsIRT1* ; *figure 1B*) dans les racines de plantes de concombre mises en contact avec une composition comprenant 2, 5, 100 et 250 mg L⁻¹ C de substances humiques (SH). Chaque point représente la moyenne ± la déviation standard de trois déterminations de trois extractions de racines différentes. Les barres d'erreur représentent le calcul d'erreur REST à l'aide des séries de Taylor et la signification statistique à un niveau de 0,05 (p<0,05) par test aléatoire est indiquée par un astérisque au dessus de l'histogramme.

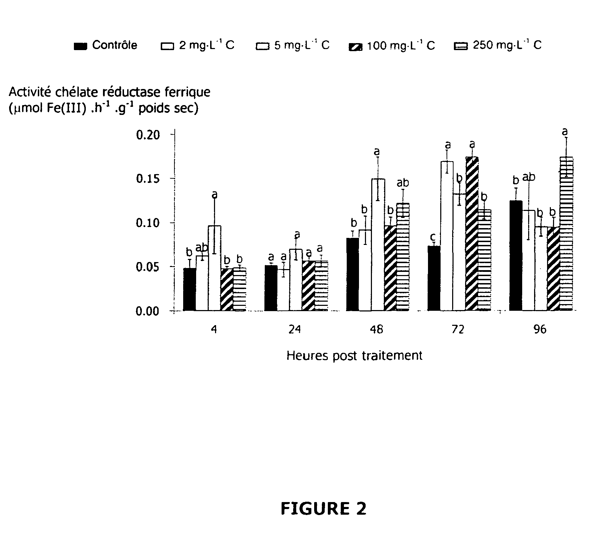

La figure 2 est une représentation graphique sous forme d'histogrammes de l'activité chélate-réductase (figure 2) des racines de plantes de concombre mises en contact avec une composition comprenant 2, 5, 100 et 250 mg L⁻¹ C de substances humiques (SH). Chaque point représente la moyenne ± la déviation standard de trois déterminations de trois extractions de racines différentes. Des lettres différentes au-dessus de l'histogramme indiquent que les valeurs sont significativement différentes à un niveau de 0,05 (p<0,05) selon le test Tuckey-b.

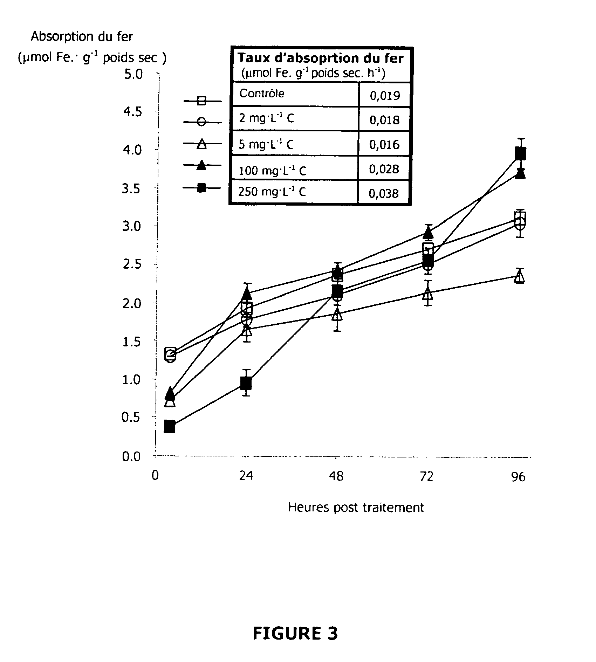

La figure 3 représente le taux d'absorption du fer par les racines des plantes de concombre exposées à différentes doses d'une composition comprenant des substances humiques (SH). Chaque point représente la moyenne ± la déviation standard de trois expériences. (La pente de chaque courbe qui correspond à la vitesse d'absorption du fer par les plantes est indiquée dans le tableau de la figure)

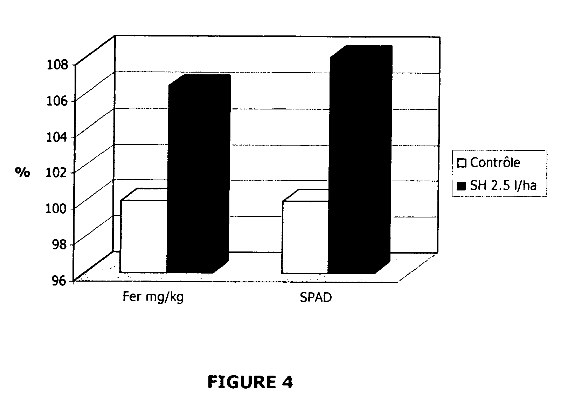

La figure 4 est une représentation graphique sous forme d'histogrammes du contenu en fer et en chlorophylle (unité SPAD) des feuilles de plantes de laitue traitées avec une composition comprenant des substances humiques (SH), comparé à celui dans les feuilles des plantes contrôles non traitées.

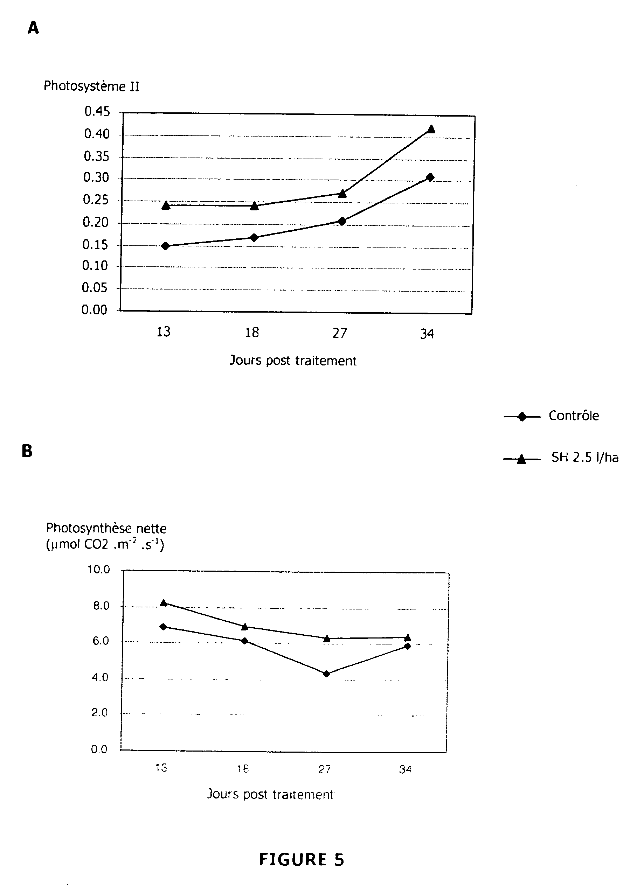

La figure 5 représente l'efficacité de la photosynthèse (photosystème Il (A) ; photosynthèse nette (B)) des plantes de laitue traitées avec une composition comprenant des substances humiques (SH), comparée à celle obtenue avec des plantes contrôles non traitées.

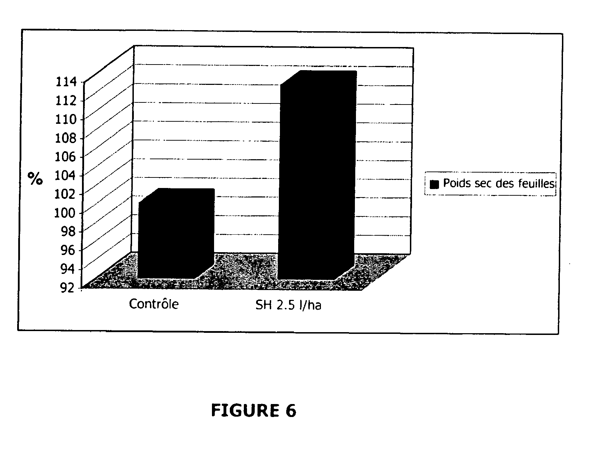

La figure 6 est une représentation graphique du poids sec des feuilles des plantes de laitue après traitement avec une composition comprenant des substances humiques (SH), comparé à celui des plantes contrôles non traitées.

### EXEMPLES

Différents aspects des effets d'une composition comprenant des substances humiques chez les plantes sont étudiés dans ces exemples, tels que l'expression des gènes et de l'activité des principaux agents moléculaires spécifiques de l'absorption du fer chez les plantes, l'absorption et la teneur en fer, la physiologie et la croissance des plantes traitées.

Des exemples de compositions qui peuvent être utilisées selon l'invention sont décrits ci-dessous (les % sont exprimés en poids/poids) :
- une composition liquide contenant 15% de sels potassiques d'acides humiques provenant de la léonardite.
- une composition liquide contenant 15% de sels potassiques d'acides humiques provenant de la léonardite et 1% de L- tryptophane.
- une composition solide contenant 45% de sels potassiques d'acides humiques provenant de la léonardite, 15% d'urée, 10% de phosphate diammonium et 30% de sépiolite.
- une composition solide contenant 50% de léonardite et 50% de sulfate d'ammonium.

### Exemple 1 - Préparation d'une composition comprenant des substances humiques (SH)

### Extraction et purification des acides humiques

Les acides humiques sont extraits et purifiés (AHP) à partir de léonardite à l'aide de la méthode préconisée par l'IHSS *(International Humic Substances Society).* 10 g de léonardite non séchée sont mélangés avec 200 ml de NaOH 0,1 M dans un récipient de 250 ml. Après 45 heures d'agitation à 25 °C à l'obscurité, le surnageant contenant l'extrait humique non fractionné est séparé de la fraction solide par centrifugation à 7650 g pendant 30 minutes. L'extraction est réalisée sous atmosphère inerte (N₂). Les AHP sont obtenus par acidification d'un aliquot de l'extrait alcalin contenant les acides humiques avec de l'acide chlorhydrique (HCl) à 6 M jusqu'à obtention d'un pH de 1,5. Après 12 heures, l'échantillon acidifié est centrifugé à 7650 g pendant 30 minutes afin de séparer les acides humiques précipités du surnageant contenant les acides fulviques et les autres composés organiques solubles dans l'acide. Après lavage avec de l'eau pour éliminer la contamination Cl⁻, les AHP sont lyophilisés.

Une composition liquide contenant 15% de sels potassiques d'acides humiques provenant de léonardite est préparée de la manière suivante : les acides humiques purifiés sont dissous dans une proportion de 15 % poids/poids dans de l'eau puis soumis à un traitement basique par KOH 0,1 M jusqu'à atteindre pH 10.

### Exemple 2 - Effets des substances humiques sur l'expression des gènes des principaux acteurs moléculaires spécifiques de l'absorption du fer chez les plantes

Les deux agents moléculaires testés dans cet exemple qui sont impliqués spécifiquement dans l'absorption du fer chez les plantes sont la chélate réductase FRO1 et le transporteur spécifique du fer *Iron Regulated Transporter 1* (IRT1).

L'effet des substances humiques sur l'expression des gènes codant ces protéines ainsi que l'activité de ces protéines sont étudiées chez des plantes qui sont traitées avec une composition comprenant des substances humiques et comparées à celles qui sont obtenues chez des plantes contrôles cultivées sans apport de substances humiques.

Des graines de *Cucumis sativus* L. (variété *Ashley)* sont mises à germer dans l'obscurité sur du papier filtre humide avec CaSO₄ 1mM. Les plants de 7 jours sont transplantés dans un milieu hydroponique dans un récipient en verre noir de 900 ml qui contient une solution nutritive aérée comme décrit par Romera et al., 1999, Annals of Botany 83 :51-55. La solution nutritive contient 40 µM de fer sous forme de chélate EDTA. Le pH de la solution nutritive est porté à 6 afin d'éviter la décomposition des chélates EDTA-fer et la précipitation du fer (*i.e*. condition de suffisance de fer). Aucune précipitation des espèces inorganiques du fer n'a été observée au cours de l'expérience. Les plantes sont cultivées en serre à 25/15°C jour/nuit, à 40-60 % d'humidité et à la lumière naturelle pendant une période d'exposition de 14 heures.

Après 21 jours de culture, différents groupes sont constitués : un groupe contrôle de plantes qui reçoivent uniquement la solution nutritive et quatre groupes de plantes qui sont traitées avec la composition comprenant des substances humiques à raison de 2, 5, 100 et 250 mg L⁻¹ C (mg équivalent de carbone par litre). La composition de l'exemple 1 contenant 15 % de substances humiques est diluée dans la solution nutritive jusqu'à atteindre les différentes concentrations, sur la base du contenu en carbone des acides humiques qui est d'environ 58 % (l'analyse du contenu en carbone est bien connu dans l'état de la technique : oxydation du carbone par du permanganate en milieu basique ou par du dichromate en milieu acide (Stevenson, 1994, Humus Chemistry, Deuxième Edition, Wiley, New York).

Après 4, 20, 48, 72 et 96 heures de traitement, les plantes sont récoltées et le matériel végétal est utilisé pour les différentes analyses. 48 heures avant chaque récolte, les plantes sont stabilisées dans une chambre de croissance (éclairement : 250 µmol m⁻² s⁻¹) pendant une période d'exposition de 14/10 h jour/nuit, une température moyenne de 23/21°C jour/nuit et une humidité relative de 60-75 %. De plus, les plantes reçoivent 6 h de lumière avant récolte.

L'expression des gènes codant la chélate-réductase (CsFRO1) et le transporteur du fer Iron Regulated Transporter 1 (CsINT1) qui sont impliqués spécifiquement dans la prise du fer chez les plantes est étudiée par RT-PCR en temps réel de la manière suivante :

### Analsyse des transcrits ARNm par RT-PCR

Les racines apicales (2-3 cm) sont collectées et broyées dans de l'azote liquide avant d'en extraire l'ARN. Les ARNs totaux sont extraits à partir de 60 mg de broyat en utilisant 350 µl de tampon de lyse guanidine-HCl du kit ARN plantes Nucleospin® (Macherey-Nagel, Allemagne), et 3,5 µl de β-mercaptoéthanol à l'aide d'un « robot » broyeur/homogénéisateur pendant 45 secondes selon les instructions du fabriquant. Les acides nucléiques extraits sont digérés par une ADNase et les ARNs résultants sont quantifiés par spectrophotométrie en mesurant l'absorbance à 260 nm. L'élimination de l'ADN est vérifiée par une PCR en temps réel contenant 50 ng d'ARNs totaux (sans transcriptase inverse préalable) et des amorces spécifiques de l'α tubuline (CsTua1 ; voir Tableau 1).

L'absence de contamination protéique est confirmée avec un rapport 260/280 nm supérieur à 1,8. L'intégrité des ARNs est vérifiée par électrophorèse sur gel d'agarose formaldéhyde 1 % avec du Sybr Gold. L'absence d'inhibiteurs dans les 250 ng d'échantillons d'ARN est également vérifiée par test SPUD avec du Sybr green comme décrit par Nolan et al., 2006, Analytical Biochemistry, 351, 308-310.

Le premier brin d'ADNc est préparé dans 20 µl de réaction contenant 1 µg d'ARN avec une transcriptase inverse RNase H+ MMLV, un mélange d'oligo(dT) et des amorces aléatoires à l'aide du kit de synthèse d'ADNc iScript® (Laboratoires Bio-Rad, Hercules, CA). La transcription inverse est réalisée pendant 5 minutes à 25°C, puis 30 minutes à 42°C et finalisée par 5 minutes à 85°C. La qualité des ADNc est vérifiée par le rapport d'amplification en 5' et 3' (en réalisant une PCR en temps réel avec des amorces spécifiques de !' o-tubuline (SEQ ID NO : 7 et SEQ ID NO : 8 ; CsTua 4 en 5' et SEQ ID NO : 9 et SEQ ID NO : 10 CsTua 6 en 3' ; voir Tableau 1).

La PCR en temps réel est réalisée sur 50 ng d'ADNc en utilisant le supermix iQ Sybr green contenant une ADN polymérase « hot-start » iTaq dans une iCycler iQ (Laboratoires Bio-Rad, Hercules, CA). Les paires d'amorces utilisées pour amplifier , l'ADNc codant la Fe³⁺ chelate-réductase de *Cucumis sativus* (SEQ ID NO : 1 et SEQ ID NO : 2 ; CsFRO1) et l'ADNc codant le transporteur du fer de *Cucumis sativus* (SEQ ID NO : 3 et SEQ ID No : 4 ; CsIRT1), ainsi que l'α-tubuline (gène de référence, SEQ ID NO : 5 et SEQ ID NO : 6 ; Cstua1) sont conçues à l'aide du logiciel *Beacon Premier Biosoft* et synthétisées par Sigma-Genosys (UK). Les séquences des amorces utilisées sont récapitulées dans le tableau 1 ci-dessous.

**Tableau 1**

| Définition de la séquence cible (gène) | Numéro d'accès Genbank | Longueur de l'amplicon (pb) | Nom des amorces | | Séquence des amorces |
|---|---|---|---|---|---|
| ADNc entier de la réductase ferrique de *Cucumis sativus.* | AY590765 | 152 | CsFRO1 | sens | |
| | | | | antisens | |
| ADNc entier du transporteur à forte affinité du fer de *Cucumis sativus.* | AY590764 | 259 | CsIRT1 | sens | |
| | | | | antisens | |
| | | 129 | Cstua1 | sens | |
| | | | | antisens | |
| ADNc partiel de l'α-tubulme de *Cucumis sativus* (gène tua). | AJ715498 | 141 | Cstua4 | sen | |
| | | | | antisens | |
| | | 149 | Cstua6 | sens | |
| | | | | antisens | |

Le programme de PCT en temps réel consiste en une activation de l'ADN polymérase iTaq à 95°C pendant 3 minutes, suivie par 40 cycles d'amplification (étape de dénaturation de 10 secondes à 95°C, étape d'hybridation de 10 secondes à 62°C et étape d'élongation de 10 secondes à 72°C pendant lesquelles les valeurs de fluorescence sont enregistrées). Pour confirmer les produits de la PCR, une courbe de dénaturation thermique est réalisée en chauffant les échantillons de 72°C à 98°C par étape de 0,1°C avec une temps d'arrêt de 10 secondes a cnaque température pendant lequel les valeurs de fluorescence sont enregistrées La température de dénaturation thermique des produits est déterminée a l'aide du logiciel *iCycler iQ Optical System* (version 3, Laboratoires Bio-Rad).

L'efficacité de réaction de la PCR (entre 1,99 et 2,02) est déterminée sur la pente de la courbe de standard réalisée par une série de dilutions du mélange des ADNc à tester, et cela avec chaque paire d'amorces spécifiques au gène d'intérêt. L'expression des gènes cibles est normalisée par rapport à l'expression de l'α-tubuline. L'expression relative (x-fois) du gène cible normalisée est calculée à l'aide du logiciel *Relative Expression Software Tool-Multipe Condition Solver* (logiciel REST-MCS-beta version août 2006), par comparaison avec les plantes contrôles en considérant les valeurs d'efficacité selon les modèles mathématiques proposés par Pfaffl et al., 2002, Nucleic Acid Research 30 (9), e36.

Les résultats de l'expression des gènes codant les principaux agents moléculaires spécifiques de l'absorption du fer suite à l'apport de substances humiques sont représentés sur la figure 1 (expression transcriptionnelle de l'enzyme chélate-réductase FRO1 (A) et expression transcriptionnelle du transporteur du fer Iron Regulated Transporter 1 (B)).

### Exemple 3 - Effets des substances humiques sur l'activité enzymatique des principaux acteurs moléculaires spécifiques de l'absorption du fer chez les plantes

Les plantes sont cultivées et traitées avec la composition comprenant les substances humiques comme décrit dans les exemples 1 et 2.

### Test chélate réductase sur racines entières

La réduction du Fe³⁺-EDTA par les racines des plantes de concombre est mesurée comme décrit par Pinton et al., 1999, Plant and Soil 210, 145-157 à l'aide du réactif bathophenanthrolinedisulfonate (BPDS). Brièvement, les racines d'une plante unique (1 g) sont incubées dans 5 ml d'une solution nutritive contenant du Fe³⁺-EDTA 0,387 mM et du BPDS à 0,286 mM (pH 5,5) dans l'obscurité à 25°C. Après 30 min, l'absorbance de la solution est mesurée à 535 nm et la quantité de Fe³⁺ réduit est calculée par la concentration de complexes Fe²⁺-BPDS formés, en utilisant un coefficient d'extinction de 22,1 mM⁻¹ cm⁻¹.

La réduction du Fe³⁻ est mesurée 4, 24, 48, 72 et 96 heures après l'ajout de la composition comprenant les substances humiques à 2, 5, 100 et 250 mg.L⁻¹ C.

L'activité chélate réductase est exprimée par rapport au poids frais des racines (PF) et les résultats sont représentés sur la figure 2.

Ainsi, les résultats présentés dans les figures 1 et 2 démontrent que les substances humiques sont capables d'activer l'expression des gènes et l'activité des principaux agents moléculaires qui sont spécifiquement impliqués dans l'absorption du fer chez les plantes.

### Exemple 4 - Effets des substances humiques sur le taux d'absorption du fer par les plantes

Les plantes sont cultivées et traitées avec la composition comprenant les substances humiques comme décrit dans les exemples 1 et 2.

La concentration en fer est mesurée sur les échantillons correspondants à 4, 24, 48, 72 et 96 heures après addition de la composition comprenant les substances humiques.

Les feuilles sont séchées à l'étuve à 40°C pendant 48h. Elles sont ensuite broyées avec un broyeur en titane. 0.5 g de broyat sont digérés dans des pots en teflon « bombes de digestion » avec 2 ml de peroxyde d'hydrogène 30% et 8 ml d'acide nitrique 65%. La digestion est réalisée pendant 30 minutes à 200°C dans un micro-ondes Ethos de Millestone. Les digestions sont jaugées à 25 ml avec de l'eau distillée de qualité MilliQ.

La concentration en fer est mesurée par ICP-OES (Termo Elemental Co. Iris Intrepid II XDL). La puissance de la source de radiofréquences utilisée est de 1150 W, le flux de nébulisation de l'échantillon est de 0.58 l/min avec un flux de gaz auxiliaire de 0.50 l/min. L'échantillon est introduit avec un flux constant de 1.85 ml/min. Leur détection à 240.488 nm ; 259.940 nm et 261.187 nm s'est réalisée après 10 secondes d'intégration.

Le calcul de la concentration se fait grâce à une courbe d'étalonnage d'une série de dilutions d'une solution stock connue, et s'exprime en fonction du poids sec (0.5g) et du facteur de dilution (25 ml).La concentration obtenue mg/l résulte de la moyenne de trois mesures.

Les résultats obtenus sont représentés sur la figure 3. A chaque temps indiqué, l'absorption du fer est mesurée par la différence entre le fer-EDTA en solution au départ et à la fin de chaque intervalle. Le taux d'absorption de fer par les racines est exprimé par rapport au poids frais des racines.

Ces résultats montrent que l'apport de substances humiques permet d'augmenter le taux d'absorption du fer chez des plantes.

### Exemple 5 - Effets des substances humiques sur le contenu en fer et la croissance des plantes

Les effets de l'utilisation d'une composition comprenant des substances humiques chez les plantes sont étudiés à différents niveaux : le contenu en fer des feuilles, le contenu en chlorophylle des feuilles, l'efficacité de la photosynthèse et le poids du système foliaire.

Des plantes de laitue sont cultivées en pots de 3 litres contenant de la perlite et sont irriguées tous les jours avec une solution complète de « hogland » contenant un minimum de 40 µM de fer disponible (3 mM KNO₃, 2 mM Ca(NO₃)₂, 1 mM MgSO₄, 0.004 mM MnCI₂, 0.023 mM H₃BO₃, 0.004 mM ZnSO₄, 0.00015 mM CuSO₄, 0.00005 mM H₂MoO₄ and 1 g 200 mL⁻¹Fe³⁺EDTA ; soit pour chaque élément : N 2 mM, P 0,10 mM, K 7,8 mM, Ca 0,18 mM, Mg 0,07 mM, Fe 40 µM, Cu 0,3 µM, Zn 0,7 µM, Mn 7,29 µM, B 11,3 µM).

Les plantes sont traitées à l'aide d'une composition liquide contenant 15 % de sels potassiques d'acides humiques provenant de la léonardite telle que décrite à l'exemple 1. Cette composition est appliquée par irrigation racinaire à raison de 2,5 litres par hectare en une seule application.

Les plantes sont cultivées en serre à 25/15°C jour/nuit, à 40-60 % d'humidité et à la lumière naturelle pendant une période d'exposition de 14 heures.

Après 34 jours de culture dans ces conditions, les plantes sont récoltées. Les différentes mesures sont effectuées puis comparées à celles obtenues avec des plantes contrôles non traitées avec la composition comprenant les substances humiques comme décrit ci-après. Les mesures concernant le photosystème II et la photosynthèse réelle ont été réalisées après 13, 18, 27 et 34 heures de culture selon la méthode décrite par Jackson E, et al., 1986, The Analysls of Agricultural materials. London, UK: Ministry of Agriculture, Fisheries and Food.

Pour mesurer le contenu en chlorophylle, la feuille est introduite dans la pince de mesure du SPAD 502meter (Minolta, Osaka, Japan). Le contenu relatif en chlorophylle est exprimé en unité SPAD et se détermine par la mesure de la transmittance de la feuille à deux longueurs d'ondes (600 nm et 700 nm). Ce contenu est relatif au témoin expérimental.

L'efficacité de la photosynthèse est mesurée à l'aide de deux paramètres : la photosynthèse nette qui représente la concentration en CO₂ absorbé par les feuilles des plantes et le photosystème II qui mesure la fluorescence de la chlorophylle et donne ainsi une indication de l'efficacité de la production d'énergie à partir de la lumière.

Pour mesurer la photosynthèse nette, la feuille est introduite dans une chambre hermétique du système CIRAS-2 PP ayant les mêmes conditions expérimentales de température, d'humidité, de CO₂, et de lumière activant la photosynthèse (PAR) que dans la serre. La valeur de photosynthèse nette est obtenue en proportion de la surface foliaire analysée et s'exprime en µmol de CO₂ m⁻² s⁻¹.

Concernant le photosystème II, l'efficacité photosynthétique est évaluée à l'aide des paramètres de fluorescence classiquement utilisés et tels que décrits notamment par Baker, N.R., Rosenqvist, E., 2004, J. Exp. Bot., 55, 1607-1621.

Enfin, pour mesurer le poids sec des feuilles, celles-ci sont séchées dans une étuve à 40°C pendant 48h, puis pesées sur une balance analytique.

Les résultats sont représentés dans les figures 4 à 6.

Le traitement des plantes avec la composition comprenant des substances humiques augmente de manière significative le contenu en fer et en chlorophylle des feuilles. Cet effet est également associé à une augmentation significative de l'activité photosynthétique chez les plantes traitées.

L'effet positif global des substances humiques sur l'assimilation du fer et les processus physiologiques principaux liés au fer (synthèse de chlorophylle et activité photosynthétique) conduit à une augmentation significative du poids sec finalement mesuré chez les plantes qui ont été traitées avec la composition comprenant les substances humiques.

Ces résultats démontrent que l'utilisation d'une composition comprenant des substances humiques permet d'améliorer la teneur en fer et la croissance des plantes.

## Revendications

1. Utilisation d'une composition comprenant des substances humiques en tant qu'activateur de l'expression des gènes codant les agents moléculaires spécifiques de l'absorption du fer chez les plantes, en condition de suffisance de fer.

2. Utilisation selon la revendication 1, **caractérisée en ce que** les plantes sont des plantes « non-graminées ».

3. Utilisation selon l'une quelconque des revendications précédentes, **caractérisée en ce que** les substances humiques sont extraites de matières organiques naturelles.

4. Utilisation selon l'une quelconque des revendications précédentes, **caractérisée en ce que** les substances humiques sont issues d'un procédé de synthèse ou de la transformation de substances humiques naturelles.

5. Utilisation selon l'une quelconque des revendications précédentes, **caractérisée en ce que** les substances humiques sont celles de la léonardite.

6. Utilisation selon l'une quelconque des revendications précédentes, **caractérisée en ce que** les substances humiques sont des acides humiques et/ou d'acides fulviques.

7. Utilisation selon l'une quelconque des revendications précédentes, **caractérisée en ce que** les substances humiques sont constituées de la fraction brune et/ou de la fraction grise des acides humiques.

8. Utilisation selon l'une quelconque des revendications précédentes, **caractérisée en ce que** les substances humiques se présentent sous forme de sels potassiques.

9. Utilisation selon l'une quelconque des revendications précédentes, **caractérisée en ce que** ladite composition contient de 5 à 70 % de substances humiques.

10. Utilisation selon l'une quelconque des revendications précédentes, **caractérisée en ce que** ladite composition contient un ou plusieurs composé(s) additionnel choisi(s) parmi les nutriments minéraux et les composants bio-stimulants des plantes.

11. Utilisation selon la, revendication 10, **caractérisée en ce que** ladite composition contient du L-tryptophane.

12. Utilisation selon l'une quelconque des revendications précédentes, **caractérisée en ce que** ladite composition se présente sous forme solide ou liquide, soluble, partiellement soluble ou insoluble dans l'eau.

13. Utilisation selon la revendication 12, **caractérisée en ce que** ladite composition se présente sous forme liquide.

14. Utilisation selon l'une quelconque des revendications précédentes, **caractérisée en ce que** ladite composition est utilisée dans des quantités allant de 5 à 50 litres par hectare dans le cas d'une composition sous forme liquide et allant de 100 à 750 kg par hectare dans le cas d'une composition sous forme solide.

## Claims

1. Use of a composition comprising humic substances as an activator of the expression of genes encoding molecular agents specific to iron absorption in plants under conditions of iron sufficiency.

2. The use of claim 1, wherein the plants are "non-grass" plants.

3. The use of any one of the preceding claims, wherein the humic substances are extracted from natural organic matter.

4. The use of any one of the preceding claims, wherein the humid substances arise from a method of synthesis or of the processing of natural humic substances.

5. The use of any one of the preceding claims, wherein the humic substances are those of léonardite.

6. The use of any one of the preceding claims, wherein the humic substances are humic acids and/or fulvic acids.

7. The use of any one of the preceding claims, wherein the humic substances are comprised of the brown humic acid fraction and/or the grey humic acid fraction.

8. The use of any one of the preceding claims, wherein the humic substances are in the form of potassium salts.

9. The use of any one of the preceding claims, wherein said composition contains from 5% to 70% of humic substances.

10. The use of any one of the preceding claims, wherein said composition contains one or more additional compounds selected from mineral nutrients and plants biostimulant compounds.

11. The use of claim 10, wherein said composition contains L-tryptophan.

12. The use of any one of the preceding claims, wherein said composition is in a solid or a liquid form, is soluble, partially soluble or insoluble in water.

13. The use of claim 12, wherein said composition is in a liquid form.

14. The use of any one of the preceding claims, wherein said composition is used in quantities ranging from 5 to 50 liters per hectare in the case of a liquid composition and from 100 to 750 kilograms per hectare in the case of a solid composition.

## Patentansprüche

1. Verwendung einer Zusammensetzung, die Huminstoffe als Aktivator der Expression der Gene, welche die für die Eisenabsorption bei Pflanzen spezifischen molekularen Wirkstoffe kodieren, umfaßt, bei Eisensuffizienz.

2. Verwendung nach Anspruch 1, **dadurch gekennzeichnet, daß** die Pflanzen "Nicht-Gramineen" sind.

3. Verwendung nach einem der vorhergehenden Ansprüche, **dadurch gekennzeichnet, daß** die Huminstoffe aus natürlichen organischen Materialien extrahiert sind.

4. Verwendung nach einem der vorhergehenden Ansprüche, **dadurch gekennzeichnet, daß** die Huminstoffe aus einem Syntheseverfahren oder der Transformation von natürlichen Huminstoffen hervorgegangen sind.

5. Verwendung nach einem der vorhergehenden Ansprüche, **dadurch gekennzeichnet, daß** die Huminstoffe diejenigen von Leonardit sind.

6. Verwendung nach einem der vorhergehenden Ansprüche, **dadurch gekennzeichnet, daß** die Huminstoffe Huminsäuren und/oder Fulvosäuren sind.

7. Verwendung nach einem der vorhergehenden Ansprüche, **dadurch gekennzeichnet, daß** die Huminstoffe von dem braunen Anteil und/oder dem grauen Anteil der Huminsäuren gebildet sind.

8. Verwendung nach einem der vorhergehenden Ansprüche, **dadurch gekennzeichnet, daß** die Huminstoffe in Form von Kalisalzen vorliegen.

9. Verwendung nach einem der vorhergehenden Ansprüche, **dadurch gekennzeichnet, daß** die Zusammensetzung 5 bis 70 % Huminstoffe enthält.

10. Verwendung nach einem der vorhergehenden Ansprüche, **dadurch gekennzeichnet, daß** die Zusammensetzung eine oder mehrere zusätzliche Verbindung(en) enthält, die aus den mineralischen Nährstoffen und den biostimulierenden Bestandteilen der Pflanzen ausgewählt ist (sind).

11. Verwendung nach Anspruch 10, **dadurch gekennzeichnet, daß** die Zusammensetzung L-Tryptophan enthält.

12. Verwendung nach einem der vorhergehenden Ansprüche, **dadurch gekennzeichnet, daß** die Zusammensetzung in fester oder flüssiger, in Wasser löslicher, teilweise löslicher oder unlöslicher Form vorliegt.

13. Verwendung nach Anspruch 12, **dadurch gekennzeichnet, daß** die Zusammensetzung in flüssiger Form vorliegt.

14. Verwendung nach einem der vorhergehenden Ansprüche, **dadurch gekennzeichnet, daß** die Zusammensetzung in Mengen von 5 bis 50 Litern pro Hektar im Fall einer Zusammensetzung in flüssiger Form und von 100 bis 750 kg pro Hektar im Fall einer Zusammensetzung in fester Form verwendet wird.
